# EUROPÄISCHE PATENTSCHRIFT

(11) **EP 1 699 835 B1**
(45) Veröffentlichungstag und Bekanntmachung des Hinweises auf die Patenterteilung: **20.02.2008**
(21) Anmeldenummer: 04803823.6
(22) Anmeldetag: 11.12.2004
(51) Int. Cl.: C08F 212/08, C08F 220/10, C08F 220/20, C09D 125/04, C09D 133/14

(54) **LÖSEMITTELARME, OH-FUNKTIONELLE DISPERSIONEN**
SOLVENT-POOR, OH-FUNCTIONAL DISPERSIONS
DISPERSIONS A FONCTION OH ET PAUVRES EN SOLVANT

(30) Priorität: 24.12.2003 DE 10361274
(43) Veröffentlichungstag der Anmeldung: 13.09.2006
(73) Patentinhaber: Bayer MaterialScience AG, 51368 Leverkusen (DE)
(72) Erfinder: MELCHIORS, Martin, 42799 Leichlingen (DE); MÜNZMAY, Thomas, 41539 Dormagen (DE); STINGL, Thomas, 56410 Montabaur (DE); OTTENSMANN, Hartmut, 40221 Düsseldorf (DE)
(86) Internationale Anmeldenummer: PCT/EP2004/014194
(87) Internationale Veröffentlichungsnummer: WO 2005/066226

(56) Entgegenhaltungen:
- EP-A- 0 712 873
- US-A- 4 140 664

## Beschreibung

Die Erfindung betrifft wässrige, hydroxyfunktionelle Bindemitteldispersionen mit niedrigem Lösemittelgehalt auf Basis von hydroxyfunktionellen Copolymerisaten, ein Verfahren zur Herstellung solcher Bindemittel, Bindemittelkombinationen auf dieser Basis und die Verwendung der Bindemittel in Lacken.

Die US 4 140 664 beschreibt thermisch härtbare Harze in Form wässrigen Lösungen oder Dispersionen. β-Propiolacton wird zur Quaternierung eines tertiären Amins, welches auch Acrylatgruppen enthält, eingesetzt, um ein betainähnliches Monomer zu erhalten. Als Lösungsmittel wird Ethylmethylketon verwendet. Im folgenden Schritt wird das so erhaltenen Monomer mit anderen Monomeren copolymerisiert. Die EP 0 712 873 A2 beschreibt ein hydrophiles Acrylcopolymer und eine dieses enthaltende wasserstämmige duroplastische Beschichtungszusammensetzung. Das Monomerengemisch enthält (a) ein Acrylsäuremonomer, (b) ein ethylenisch ungesättigtes Monomer mit einer Säuregruppe und (c) ein ethylenisch ungesättigtes Monomer, das von den Monomeren (a) und (b) verschieden ist. Das Monomerengemisch kann gegebenenfalls einen kleinen Anteil weiterer Monomeren oder ein Addukt derselben mit einem ε-Caprolacton zum Einführen von Hydroxylgruppen in das Harz enthalten. Dieses Caprolacton wird einpolymerisiert.

Es ist bekannt, in Beschichtunsssysiemen (Paint & Resin 12/83, S. 34 ff., DE-A 3 209 421, EP-A 95 263. EP-A 105 293, EP-A 133 949, EP-A 288 763, DE-A 202 212 und dort zitierter Literatur) wasserverdünnbare Bindemittel auf Copolymerbasis einzusetzen. Diese enthalten jedoch in der Regel Emulgatoren zur Stabilisierung und/oder größere Anteile organischer Colösemittel.

Üblicherweise beeinflussen die Emulgatoren die Eigenschaften der Lacke bzw. der Beschichtungen, wie z.B. Wasserfestigkeit, Filmoptik (Glanz), Pigmentierfähigkeit dabei negativ,

Die Verwendung größerer Mengen organischer Lösemittel ist aus ökologischen Gründen unerwünscht. Sie ist jedoch meist nicht zu vermeiden, um bei der Polymerisatherstellung ein ausreichende Rührbarkeit und Wärmeabfuhr der Reaktionsmischung sowie einen gewissen Mindestfullgrad des Reaktors zu gewährleisten. Zusätzlich führen organische Lösemittel in wässrigen Beschichtungsmitteln zu vorteilhaften Effekten wie verbesserter Lagerstabilität, Pigmentbenetzung, Filmoptik und Verlauf.

Eine nachträgliche Reduzierung verfahrensbedingt enthaltener Lösemittel aus Copolymerisaten oder -dispersionen ist mit hohem apparativen und energetischen Aufwand und damit auch hohen Kosten verbunden, so dass Bedarf an wässrigen Polymerisatdispersionen besteht, bei deren Herstellung auf die Verwendung organischer Lösemittel weitgehend verzichtet werden kann, ohne dass eine Verschlechterung der anwendungstechnischen Eigenschaften auftritt.

Copolymerisatdispersionen, welche durch eine chemische Reaktion, z.B. mit einem Aminoplastharz, einem blockierten Polyisocyanat oder einem Polyisocyanat ausgehärtet werden sollen, müssen eine bestimmte Menge an reaktiven Gruppen, z.B. Hydroxygruppen, enthalten. Diese Gruppen werden in der Regel durch die Mitverwendung hydroxyfunktioneller (Meth)acrylsäureester bei der Copolymerisation in das Copolymer eingebracht. Diese Rohstoffe sind allerdings im Vergleich zu den nichtfunktionellen (Meth)acrylsäureestern oder auch zu Styrol sehr teuer. Zudem müssen häufig auch größere Mengen dieser Rohstoffe im Vergleich zu organisch gelösten Copolymerisaten eingesetzt werden, um durch eine größere Vernetzungsdichte die Hydrophilie der Lackfilme zu kompensieren.

Einen. Weg zur Herstellung hydroxyfunktioneller Copolymerisatsekundärdispersionen, der den Einsatz von Lösungsmitteln bei der Polymerisation weitgehend vermeidet, weist die Lehre der EP-A 0 758 007. Nach dieser Schrift werden die üblicherweise eingesetzten Lösemittel ganz oder teilweise durch hydroxyfunktionelle Polyether ersetzt. Die hydroxyfunlctionellen Polyether verbleiben als Reaktivverdünner in der Sekundärdispersion und reagieren bei der späteren Vernetzung mit Isocyanaten oder blockierten Isocyanaten unter Urethanbildung mit. Sie tragen damit nicht zum VOC bei. Als nachteilig an diesen Produkten erweist sich aber ihre schlechte Beständigkeit.

Es wurde nun gefunden, dass wässrige Copolymerisatdispersionen mit niedrigem Lösemittelgehalt und hohem Beständigkeitsniveau der Lackfilme basierend auf hydroxyfunktionellen Copolymerisaten hergestellt werden können, wenn Lactone in Verbindung mit niedermolekularen Polyolen als Reaktivverdünner verwendet werden.

Gegenstand der Erfindung ist daher ein Verfahren zur Herstellung von Copolymerisatdispersionen, bei dem
A) eine oder mehrere Vinylmonomermischungen enthaltend
   a) OH-gruppenfreie (Meth)acrylsäureester und/oder Vinylaromaten,
   b) hydroxyfunktionelle Vinylmonomere und/oder hydroxyfunktionelle (Meth)acrylsäureester,
   c) ionische und/oder potentiell ionische, zur radikalischen Copolymerisation befähigte Monomere sowie
   d) gegebenenfalls weitere, von den Verbindungen der Komponenten a) - c) verschiedene zur radikalischen Copolymerisation befähigte Monomere
      in Anwesenheit von
   e) mindestens einer lactongruppenhaltigen Verbindung sowie
   f) niedermolekularen Polyolen mit einem zahlenmittleren Molekulargewicht von 62 bis 250 Da
   radikalisch polymerisiert werden und das so erhaltene Copolymerisat anschließend
B) vor oder nach Zugabe eines Neutralisationsmittels
C) in Wasser dispergiert wird.

Ferner ist ein weiterer Gegenstand der Erfindung die nach dem vorstehend beschriebenen Verfahren erhältlichen wässrigen Copolymerisatdispersionen.

Als Monomere der Komponente a) werden Acrylate und Methacrylate (im Folgenden als (Meth)-Acrylate bezeichnet) mit 1 bis 18 Kohlenstoffatomen im Alkoholteil der Estergruppe eingesetzt. Dieser Alkoholteil kann linear-, verzweigt- oder cycloaliphatisch sein.

Beispielsweise geeignet als Monomere der Komponente a) sind Methyl-, Ethyl-, n-Propyl-, n-Butyl-, Isopropyl-, Isobutyl-, t-Butyl-, die isomeren Pentyl-, Hexyl-, 2-Ethylhexyl-, Octyl-, Dodecyl-, Hexadecyl-, Octadecyl- oder Cyclohexyl-, Trimethylcyclohexyl- und Isobomyl-(meth)acrylate oder Styrol.

Ferner können in a) auch Acetoacetoxyethylmethacrylat, Acrylamid, Acrylnitril, Vinylether, Methacrylnitril, Vinylacetate, gegebenenfalls substituierte Styrole und Vinyltoluole eingesetzt werden.

Ebenfalls möglich ist der Einsatz beliebiger Mischungen der vorstehend genannten Verbindungen in der Komponente a).

In Komponente b) können polymerisierbare, OH-gruppenhaltige Monomere, wie beispielsweise Hydroxyalkylester ungesättigter Carbonsäuren, bevorzugt Hydroxyalkyl(meth)acrylate mit 2 bis 12, bevorzugt 2 bis 6 Kohlenstoffatomen im Hydroxyalkylrest, eingesetzt werden.

Beispiele derartiger Verbindungen sind 2-Hydroxyethyl(meth)acrylat, die isomeren Hydroxypropyl(meth)acrylate, 2-, 3- und 4-Hydroxybutyl(meth)acrylate sowie die isomeren Hydroxyhexyl-(meth)acrylate.

Ebenfalls in b) können mit Alkylenoxiden modifizierte oder kettenverlängerte, polymerisierbare hydroxyfunktionelle Monomere mit einem zahlenmittleren Molekulargewicht ≤ 3 000 g/mol, bevorzugt ≤ 500 g/mol eingesetzt werden. Als Alkylenoxide kommen hierfür vorzugsweise Ethylen-, Propylen oder Butylenoxid einzeln oder in Mischungen zum Einsatz.

Als ionische und/oder potentiell ionische, zur radikalischen Copolymerisation befähigte Monomeren der Komponente c) können olefinisch ungesättigte Monomere mit Carbonsäure- oder Carbonsäureanhydrid-Gruppen, wie z.B. Acrylsäure, Methacrylsäure, β-Carboxyethylacrylat, Crotonsäure, Fumarsäure, Maleinsäureanhydrid, Itaconsäure oder Monoalkylester zweibasiger Säuren bzw. Anhydride wie z.B. Maleinsäure-monoalkylester eingesetzt werden, bevorzugt sind Acrylsäure und/oder Methacrylsäure.

Ferner geeignet als Verbindungen der Komponente c) sind auch ungesättigte, radikalisch polymerisierbare Verbindungen mit Phosphat- bzw. Phosphonat- oder Sulfonsäure- bzw. Sulfonatgruppen, wie z.B. in der WO-A 00/39181 (S. 8 Z. 13 - S. 9 Z. 19) beschrieben, insbesondere 2-Acrylamido-2-methylpropansulfonsäure.

Optional können auch weitere zur radikalischen Copolymerisation befähigte Monomere als Verbindungen der Komponente d) eingesetzt werden. Dies können beispielsweise di- oder höherfunktionelle (Meth)acrylatmonomere und/oder Vinylmonomere, wie z.B. Hexandioldi(meth)-acrylat oder Divinylbenzol sein. Des weiteren möglich ist die Zugabe polymerisierbarer, nichtionisch hydrophilierend wirkender Verbindungen wie Acrylate hydroxyfunktioneller Polyalkylenoxidether.

Bevorzugt erfolgt die Hydrophilierung der Copolymerisate nur durch ionische und/oder potentiell ionische Gruppen.

Die Mengenverhältnisse der Aufbaukomponenten a) bis d) werden typischerweise so gewählt, dass eine OH-Zahl von 12 bis 200 mg KOH/g, bevorzugt von 25 bis 150 mg KOH/g und besonders bevorzugt von 50 bis 150 mg KOH/g Feststoff und einer Säurezahl von 0 bis 50 mg KOH/g, bevorzugt 10 bis 30, besonders bevorzugt von 15 bis 25 mg KOH/g bezogen auf das Copolymerisat resultiert.

Bevorzugt werden dazu bezogen auf das Copolymerisat 50 - 85 Gew.-% Komponente a), 15 - 40 Gew.-% Komponente b), 0,5 - 5 Gew.-% Komponente c) und 0 - 34,5 Gew.-% Komponente d) gewählt, so dass Copolymerisate erhalten werden, die hinsichtlich OH- und Säurezahl den vorstehenden Angaben entsprechen und wobei sich die Mengen aus den vorstehenden Bereichen zu 100 Gew.-% aufaddieren.

Als lactongruppenhaltige Verbindungen der Komponente e) kommen alle dem Fachmann bekannten Lactone in Betracht. Bevorzugt sind Butyrolacton, Valerolacton und ε-Caprolacton sowie deren beliebige Mischungen untereinander. Besonders bevorzugt wird in e) ε-Caprolacton verwendet.

Die niedermolekularen Polyole der Komponente f) sind die dem Fachmann an sich bekannten hydroxyfunktionellen Verbindungen eines Molekulargewichts von 62 bis 250 Da mit einer mittleren Hydroxylfunktionalität von bevorzugt größer 1,5, besonders bevorzugt 2 bis 4.

Beispiele für derartige niedermolekulare Polyole sind Ethandiol, Di-, Tri-, Tetraethylenglykol, 1,2-Propandiol, Di-, Tri-, Tetrapropylenglykol, 1,3-Propandiol, Butandiol-1,4, Butandiol-1,3, Butandiol-2,3, Pentandiol-1,5, Hexandiol-1,6, 2,2-Dimethyl-1,3-propandiol, 1,4-Di-hydroxycyclohexan, 1,4-Dimethylolcyclohexan, Octandiol-1,8, Decandiol-1,10, Dodecan-diol-1,12, Glyzerin, Trimethylolethan, Trimethylolpropan, Pentaerythrit, Dipentaerythrit sowie deren Gemische.

Die Vorgehensweise zur Polymerisation der ungesättigten Monomere ist dem Fachmann an sich vertraut Typischerweise werden dazu in einem Reaktionsgefäß die Komponenten e) und f) als Reaktivverdünner vorgelegt und die ungesättigten Monomere unter Einsatz eines Radikalinitiators darin polymerisiert.

Gegebenenfalls können zusätzliche organische Lösemittel in untergeordneter Menge zum Einsatz kommen. Geeignete Hilfslösemittel sind beliebige in der Lacktechnologie bekannte Lösemittel, wie z.B. Alkohole, Ether, Ethergruppen-haltige Alkohole, Ester, Ketone, N-Methylpyrrolidon oder unpolare Kohlenwasserstoffe bzw. Gemische dieser Lösemittel. Die Lösemittel werden in solchen Mengen eingesetzt, dass ihr Gehalt in der fertigen Dispersion 0 bis 5 Gew.-% beträgt. Falls erforderlich können die eingesetzten Lösemittel durch eine Destillation wieder teilweise entfernt werden. In einer bevorzugten Ausführungsform wird jedoch ganz auf den Einsatz zusätzlicher organischer Lösemittel verzichtet.

Die Copolymerisation wird im Allgemeinen bei 40 bis 200°C, bevorzugt bei 60 bis 180°C, besonders bevorzugt bei 80 bis 160°C durchgeführt.

Als Initiatoren für die Polymerisationsreaktion eignen sich organische Peroxide wie Di-tert.-Butylperoxid oder tert.-Butylperoxy-2-ethylhexanoat und Azoverbindungen wie Azodiisobuttersäurenitril (AIBN). Die eingesetzten Initiatormengen hängen vom gewünschten Molekulargewicht ab. Aus Gründen der Prozesssicherheit und des leichteren Handlings können Peroxidinitiatoren auch als Lösung in geeigneten organischen Lösemitteln der oben genannten Art eingesetzt werden.

In einer bevorzugten Ausführungsform des Verfahren erfolgt eine zweistufige Zugabe und Polymerisation von ungesättigten Monomeren der vorstehend genanten Art in Anwesenheit der Verdünner e) und f). Dabei wird in einem ersten Schritt (I) ein hydroxyfunktionelles Copolymerisat mit einer OH-Zahl von 12 bis 200 mg KOH/g Feststoff und einer Säurezahl von 0 bis 50 mg KOH/g Feststoff bestehend aus 55 - 90. Gew.-% Komponente a), 2,5 - 50 Gew.-% Komponente b), 0 - 6,5 Gew.-% Komponente c) und 0 - 42,5 Gew.-% Komponente d) hergestellt. In einem anschließenden Schritt (II) wird in der aus Schritt (I) erhaltenen Reaktionsmischung ein weiteres Polymerisat aus Monomeren der Komponenten a) - d) hergestellt, wobei dieses Polymerisat eine OH-Zahl von 20 bis 200 mg KOH/g Feststoff und eine Säurezahl von 50 bis 200 mg KOH/g Feststoff aufweist. Das Polymerisat aus Schritt (11) besteht dabei aus 45 - 80 Gew.-% Komponente a), 5 - 50 Gew.-% Komponente b), 6,5 - 25 Gew.-% Komponente c) und 0 - 43,5 Gew.-% Komponente d). Die %-Angaben der Polymerisatzusammensetzung addieren sich je Polymerisat zu 100 Gew.-% auf. Die Monomermengen der beiden Polymerisatherstellungen sind dabei so zu wählen, dass das Massenverhältnis des Polymerisats aus Schritt (I) zu dem aus Schritt (II) 10:1 bis 1:2, bevorzugt 6:1 bis 2:1 beträgt.

Statt eines mehrstufigen Polymerisationsverfahren ist es ebenfalls möglich den Prozess kontinuierlich (Gradientenpolymerisation) durchzuführen, d.h. es wird eine Monomermischung mit sich gemäß der Zusammensetzung des oder der Copolymerisate A) ändernder Zusammensetzung zugegeben, wobei bevorzugt die hydrophilen Monomeranteile gemäß der Komponenten c) und gegebenenfalls d) gegen Ende des Zulaufs höher sind als zu Beginn.

Die nach dem erfindungsgemäßen Verfahren erhältlichen Copolymerisate weisen zahlenmittlere Molekulargewichte Mₙ von 500 bis 30 000 g/mol, bevorzugt 1 000 bis 15 000 g/mol, besonders bevorzugt 1 500 bis 10 000 g/mol auf.

Vor, während oder nach der Dispergierung der hydroxyfunktionellen Copolymerisate A) in Wasser (Schritt C)) werden die vorhandenen Säuregruppen zumindest anteilig durch Zugabe geeigneter Neutralisationsmittel in ihre Salzform überführt (Schritt B)). Als Neutralisationsmittel geeignet sind organische Amine oder wasserlösliche anorganische Basen, wie z.B. lösliche Metallhydroxide, -Carbonate oder -Hydrogencarbonate.

Beispiele für geeignete Amine sind N-Methylmorpholin, Triethylamin, Ethyldiisopropylamin, N,N-Dimethylethanolamin, N,N-Dimethylisopropanolamin, N-Methyldiethanolamin, Diethylethanolamin, Triethanolamin, Butanolamin, Morpholin, 2-Aminomethyl-2-methyl-propanol oder Isophorondiamin. In Mischungen kann auch anteilig Ammoniak eingesetzt werden. Besonders bevorzugt sind Triethanolamin, N,N-Dimethylethanolamin und Ethyldiisopropylamin.

Die Neutralisationsmittel werden in B) in solchen Mengen zugesetzt, dass in Summe ein theoretischer Neutralisationsgrad [der Säuregruppen] von 40 bis 150 %, bevorzugt 60 bis 120 % vorliegt. Der Neutralisationsgrad versteht sich dabei als Verhältnis von zugesetzten basischen Gruppen der Neutralisationskomponente aus B) zu Säurefunktionen des Copolymerisats. Der pH-Wert der erfindungsgemäßen wässrigen Bindemitteldispersion beträgt 6 bis 10, bevorzugt 6,5 bis 9.

Die erfindungsgemäßen wässrigen, hydroxyfunktionellen Bindemitteldispersionen weisen einen Festkörpergehalt von 25 bis 70 Gew.-%, bevorzugt 35 bis 60 Gew.-%, besonders bevorzugt von 50 bis 59 Gew.-% auf, sowie einen Gehalt an organischen Lösemitteln von 0 bis 12 Gew.-%, bevorzugt 1 bis 3,5 Gew.-% auf.

Die erfindungsgemäßen Bindemittel-Dispersionen können zu wässrigen Beschichtungsmitteln verarbeitet werden. Durch Kombination mit Vernetzern können dabei, je nach Reaktivität oder gegebenenfalls Blockierung der Vernetzer, sowohl Einkomponentenlacke als auch Zweikomponentenlacke hergestellt werden. Unter Einkomponentenlacken im Sinne der vorliegenden Erfindung sind dabei Überzugsmittel zu verstehen, bei denen Bindemittelkomponente und Vemetzerkomponente zusammen gelagert werden können, ohne dass eine Vernetzungsreaktion in merklichen bzw. für die spätere Applikation schädlichem Ausmaß stattfindet. Die Vernetzungsreaktion findet erst bei Applikation nach einer Aktivierung des Vernetzers statt. Diese Aktivierung kann z.B. durch Temperatursteigerung bewirkt werden. Unter Zweikomponentenlacken im Sinne der vorliegenden Erfindung versteht man Überzugsmittel, bei denen Bindemittelkomponente und Vernetzerkomponente aufgrund ihrer hohen Reaktivität in getrennten Gefäßen gelagert werden müssen. Die beiden Komponenten werden erst kurz vor Applikation gemischt und reagieren dann im Allgemeinen ohne zusätzliche Aktivierung. Zur Beschleunigung der Vernetzungsreaktion können aber auch Katalysatoren eingesetzt oder höhere Temperaturen angewendet werden.

Gegenstand der vorliegenden Erfindung sind daher auch wässrige Beschichtungsmittel mindestens enthaltend
i) ein oder mehrere Copolymerisatdispersionen gemäß Anspruch 6 sowie
ii) mindestens einen OH-gruppenreaktiven Vernetzer.

Geeignete OH-gruppenreaktive Vernetzer sind beispielsweise Polyisocyanat-Vernetzer, Amid- und Amin-Formaldehydharze, Phenolharze, Aldehyd- und Ketonharze, wie z.B. Phenol-Formaldehydharze, Resole, Furanharze, Harnstoffharze, Carbamidsäureesterharze, Triazinharze, Melaminharze, Benzoguanaminharze, Cyanamidharze, Anilinharze, wie sie in "Lackkunstharze", H. Wagner, H.F. Sarx, Carl Hanser Verlag München, 1971, beschrieben sind.

Bevorzugt werden als Vernetzer gegebenenfalls blockierte Polyisocyanate eingesetzt. Solche Polyisocyanate weisen typischerweise 2 oder mehr NCO-Gruppen pro Molekül auf und basieren beispielsweise auf Isophorondiisocyanat, Hexamethylendiisocyanat, 1,4-Diisocyanatocyclohexan, Bis-(4-iso-cyanatocyclohexan)-methan, 1,3 - Diisocyanatobenzol, Triisocyanatononan oder den isomeren 2,4- und 2,6-TDI und können ferner Urethan-, Isocyanurat und/oder Biuretgruppen aufweisen.

Besonders bevorzugt ist der Einsatz niedrigviskoser gegebenenfalls hydrophilierter Polyisocyanate der vorstehend genannten Art auf Basis aliphatischer oder cycloaliphatischer Isocyanate.

Die als Vernetzer eingesetzten Polyisocyanate weisen bei 23°C im Allgemeinen eine Viskosität von 10 bis 5 000 mPas auf und können auch falls zur Viskositätseinstellung gewünscht in Abmischung mit geringen Mengen an inerten Lösemitteln zum Einsatz gelangen.

Die erfindungswesentlichen Copolymerisate sind im Allgemeinen ausreichend hydrophil, so dass auch hydrophobe Vernetzerharze ohne zusätzliche Emulgatoren dispergiert werden können. Eine Verwendung externer Emulgatoren ist dadurch jedoch nicht ausgeschlossen.

Wasserlösliche oder dispergierbare Polyisocyanate sind z.B. durch Modifikation mit Carboxylat-, Sulfonat- und/oder Polyethylenoxidgruppen und/oder Polyethylenoxid/Polypropylenoxidgruppen erhältlich. Eine Hydrophilierung der Polyisocyanate ist z.B. durch Umsetzung mit unterschüssigen Mengen an einwertigen, hydrophilen Polyetheralkoholen möglich. Die Herstellung derartiger hydrophilierter Polyisocyanate ist beispielsweise in der EP-A 0 540 985 (S. 3, Z 55 bis S. 4 Z. 5) beschrieben.

Gut geeignet sind auch die in der EP-A 959 087 (S. 3 Z. 39 bis 51) beschriebenen Allophanatgruppen enthaltenden Polyisocyanate, die durch Umsetzung monomerenarmer Polyisocyanate mit Polyethylenoxidpolyetheralkoholen unter Allophanatisierungsbedingungen hergestellt werden. Auch die in der DE-A 100 078 21 (S. 2 Z. 66 bis S. 3 Z. 5) beschriebenen wasserdispergierbaren Polyisocyanatgemische auf Basis von Triisocyanatononan sind geeignet, sowie mit ionischen Gruppen (Sulfonat-, Phosphonatgruppen) hydrophilierte Polyisocyanate, wie sie z.B. in der DE 100 24 624 (S. 3 Z. 13 bis 33) beschrieben sind.

Prinzipiell ist natürlich auch der Einsatz von Mischungen verschiedener Vernetzerharze möglich.

Vor, während oder nach der Herstellung der erfindungsgemäßen wässrigen, hydroxyfunktionellen Bindemitteldispersion können die üblichen Hilfs- und Zusatzmittel der Lacktechnologie zugesetzt werden, wie z.B. Entschäumungsmittel, Verdickungsmittel, Pigmente, Dispergierhilfsmittel, Katalysatoren, Hautverhinderungsmittel, Antiabsetzmittel oder Emulgatoren.

Diese Hilfs- und Zusatzmittel können auch dem Beschichtungsmittel, enthaltend die erfindungsgemäßen wässrigen, hydroxyfunktionellen Bindemitteldispersionen, zugesetzt werden.

Die wässrigen Beschichtungsmittel, enthaltend die erfindungsgemäßen wässrigen, hydroxyfunktionellen Copolymerisatdispersionen eignen sich für alle Einsatzgebiete in denen wässrige Anstrich- und Beschichtungssysteme mit hohen Anforderungen an die Beständigkeit der Filme Verwendung finden, z.B. für die Beschichtung mineralischer Baustoff-Oberflächen, Lackierung und Versiegelung von Holz und Holzwerkstoffen, Beschichtung metallischer Oberflächen (Metallbeschichtung), Beschichtung und Lackierung asphalt- oder bitumenhaltiger Beläge, Lackierung und Versiegelung diverser Kunststoffoberflächen (Kunststoffbeschichtung) sowie Hochglanzlacke.

Da Beschichtungsmittel enthaltend die erfindungswesentlichen Copolymerisatdispersionen zu Beschichtungen mit sehr hohem Eigenschaftsniveau führen, eignen sie sich auch zu Herstellung von rissüberbrückenden Beschichtungen vorzugsweise im Baubereich und auf mineralischen Untergründen.

Die wässrigen Beschichtungsmittel, enthaltend die erfindungsgemäßen wässrigen, hydroxyfunktionellen Bindemitteldispersionen, werden zur Herstellung von Grundierungen, Füller, pigmentierter oder transparenter Decklacke, Klarlacke und Hochglanzlacke sowie Einschichtlacke, die in der Einzel- und Serienapplikation, z.B. im Bereich der Industrielackierung, Automobil-Erst- und -Reparaturlackierung Anwendung finden können, eingesetzt.

Es ist bevorzugt die wässrigen Beschichtungsmittel, enthaltend die erfindungsgemäßen wässrigen, hydroxyfunktionellen Bindemitteldispersionen für die Beschichtung bzw. Lackierung mineralischer Oberflächen, von Holz und Kunststoffen.

Die Aushärtung der erfindungsgemäßen Beschichtungsmittel erfolgt dabei typischerweise bei Temperaturen von 0 bis 140°C, bevorzugt von 18 bis 80°C.

Diese Beschichtungen weisen bei sehr guter Filmoptik ein hohes Niveau in Lösemittel- und Chemikalienbeständigkeit, gute Wetterbeständigkeit, hohe Härte und schnelle Trocknung auf.

Die Herstellung der Beschichtungen kann nach den unterschiedlichen Spritzverfahren wie beispielsweise Luftdruck-, Airless- oder Elektrostatik-Spritzverfahren unter Verwendung von Ein- oder gegebenenfalls Zweikomponenten-Spritzanlagen erfolgen. Die Lacke und Beschichtungsmittel, enthaltend die erfindungsgemäßen wässrigen, hydroxyfunktionellen Bindemitteldispersionen, können jedoch auch nach anderen Methoden, beispielsweise durch Streichen, Rollen oder Rakeln appliziert werden.

### Beispiele:

Soweit nicht abweichend angegeben beziehen sich alle Prozentangaben auf Gewichtsprozent.

Viskositätsmessungen wurden mit einem Kegel-Platte-Viskosimeter Viscolab LC3 ISO der Firma Physica, Stuttgart, Deutschland nach DIN 53019 bei einem Schergefälle von 40 s⁻¹ durchgeführt.

Die Bestimmung der mittleren Teilchengröße erfolgte mittels Laser-Korrelations-Spektroskopie (Zetasizer^{®} 1000, Malvem Instruments, Herrenberg, Deutschland).

Die angegebenen OH-Zahlen wurden ausgehend von den eingesetzten Monomeren berechnet.
Säurezahlen: Bestimmungsmethode, DIN ISO 3682
Dowanol^{®} PnB: Propylenglycol-n-butylether, Dow Chemicals, Midland, USA.
Peroxan^{®} DB: Di-tert.-butylperoxid, Pergan GmbH, Bocholt, Deutschland.

### Beispiel 1

In einem 15 1-Reaktionsgefäß mit Rühr-, Kühl- und Heizvorrichtung wurden 819 g ε-Caprolacton zusammen mit 321 g Trimethylolpropan und 185 g Dowanol^{®} PnB vorgelegt und auf 138°C auf geheizt. Bei dieser Temperatur wurde eine Lösung aus 14,5 g Di-tert.-butylperoxid in 14,5 g Dowanol^{®} PnB innerhalb 20 min zugegeben. Im Anschluss daran wurde eine Monomermischung aus 256 g Styrol, 666 g Methylmethacrylat, 1245 g Hydroxyethylmethacrylat, 613 g Butylmethacrylat, 658 g i-Bornylmethacrylat und 170 g Butylacrylat sowie parallel dazu eine Lösung von 70,5 g Di-tert.-butylperoxid in 70,5 g Dowanol^{®} PnB innerhalb von 4,5 Stunden gleichmäßig zudosiert. Man hielt 20 Minuten bei dieser Temperatur. Im Anschluss daran wurde eine Monomermischung aus 232,5 g Methylmethacrylat, 328,5 g Hydroxyethylmethacrylat, 182,5 g Butylacrylat und 109 g Acrylsäure sowie parallel dazu eine Lösung von 14,5 g Di-tert.-butylperoxid in 30 g Dowanol^{®} PnB innerhalb von 1,5 Stunden gleichmäßig zu dosiert. Anschließend 1 Stunde bei 138°C nachgerührt, dann auf 100°C abgekühlt und 143 g N,N-Dimethylethanolamin zugegeben. Nach 30 Minuten Homogenisieren wurde innerhalb von 2 Stunden bei 80°C mit 6080 g Wasser dispergiert. Man erhielt eine Copolymerisat-Dispersion mit folgenden Daten:

| | |
|---|---|
| OH-Gehalt_{Theorie} (Festkörper ohne N,N-Dimethylethanolamin) | 5,7% |
| Säurezahl (Festkörper) | 17 mg KOH/g |
| Festkörpergehalt | 47% |
| Viskosität | 1250 mPas/23°C |
| pH-Wert (10 %ig in Wasser) | 8,1 |
| Neutralisationsgrad | 105 % |
| Mittlere Teilchengröße | 140 nm |

### Beispiel 2

In einem 15 1-Reaktionsgefäß mit Rühr-, Kühl- und Heizvorrichtung wurden 1436 g ε-Caprolacton zusammen mit 844 g Trimethylolpropan und 370 g Dowanol^{®} PnB vorgelegt und auf 138°C aufgeheizt. Bei dieser Temperatur wurde eine Lösung aus 14,5 g Di-tert.-butylperoxid in 14,5 g Dowanol^{®} PnB innerhalb 20 min zugegeben. Im Anschluss daran wurde eine Monomermischung aus 256 g Styrol, 666 g Methylmethacrylat, 1245 g Hydroxyethylmethacrylat, 613 g Butylmethacrylat, 658 g i-Bornylmethacrylat und 170 g Butylacrylat sowie parallel dazu eine Lösung von 70,5 g Di-tert.-butylperoxid in 70,5 g Dowanol^{®} PnB innerhalb von 4,5 Stunden gleichmäßig zu dosiert. Man hielt 20 Minuten bei dieser Temperatur. Im Anschluss daran wurde eine Monomermischung aus 232,5 g Methylmethacrylat, 328,5 g Hydroxyethylmethacrylat, 182,5 g Butylacrylat und 109 g Acrylsäure sowie parallel dazu eine Lösung von 14,5 g Di-tert.-butylperoxid in 30 g Dowanol^{®} PnB innerhalb von 1,5 Stunden gleichmäßig zu dosiert. Anschließend 1 Stunde bei 138°C nachgerührt, dann auf 100°C abgekühlt und 143 g N,N-Dimethylethanolamin zugegeben. Nach 30 Minuten Homogenisieren wurde innerhalb von 2 Stunden bei 80°C mit 6080 g Wasser dispergiert. Man erhielt eine Copolymerisat-Dispersion mit folgenden Daten:

| | |
|---|---|
| OH-Gehalt_{Theorie} (Festkörper ohne N,N-Dimethylethanolamin) | 7,7% |
| Säurezahl (Festkörper) | 17 mg KOH/g |
| Festkörpergehalt | 48% |
| Viskosität | 1200 mPas (23°C, Schergefälle 40⁻¹) |
| pH-Wert (10 %ig in Wasser) | 8,1 |
| Neutralisationsgrad | 105% |
| Mittlere Teilchengröße | 130 nm |

### Beispiel 3

In einem 6 1-Reaktionsgefäß mit Rühr-, Kühl- und Heizvorrichtung wurden 325 g ε-Caprolacton zusammen mit 275 g Trimethylolpropan vorgelegt und auf 148°C aufgeheizt. Bei dieser Temperatur wurde eine Lösung aus 8,25 g Di-tert.-butylperoxid in 8,25 g Dowanol^{®} PnB innerhalb 20 min zugetropft. Im Anschluss daran wurde eine Monomermischung aus 365 g Methylmethacrylat, 854 g Hydroxyethylmethacrylat, 600 g Butylacrylat und 480 g Styrol sowie parallel dazu eine Lösung von 28,5 g Di-tert.-butylperoxid in 28,5 g Dowanol^{®} PnB innerhalb von 4,5 Stunden gleichmäßig zudosiert. Man hielt ca. 20 Minuten bei dieser Temperatur. Im Anschluss daran wurde eine Monomermischung aus 122,25 g Methylmethacrylat, 172,75 g Hydroxyethylmethacrylat, 96 g Butylacrylat und 84 g Acrylsäure sowie parallel dazu eine Lösung von 8,25 g Di-tert.-butylperoxid in 20,75 g Dowanol^{®} PnB innerhalb von 1,5 Stunden gleichmäßig zudosiert. Anschließend 1 Stunde bei 148°C nachgerührt, dann auf 100°C abgekühlt und 174 g Triethanolamin zugegeben. Nach 30 Minuten Homogenisieren wurde innerhalb von 2 Stunden bei 80°C mit 2050 g Wasser dispergiert. Man erhielt eine Copolymerisat-Dispersion mit folgenden Daten:

| | |
|---|---|
| OH-Gehalt_{Theorie} (Festkörper inklusive Triethanolamin) | 8,2 % |
| Säurezahl (Festkörper) | 22 mg KOH/g |
| Festkörpergehalt | 57 % |
| Viskosität | 2 500 mPas/23°C |
| pH-Wert (10 %ig in Wasser) | 7,4 |
| Neutralisationsgrad | 100% |
| Mittlere Teilchengröße | 145 nm |

### Beispiel 4: Vergleich

(EP-A 0 758 007, Beispiel 1)

In einem 6 1-Reaktionsgefäß mit Rühr-, Kühl- und Heizvorrichtung wurden 116 g Butylglykol und 150 g eines Polyethers (Desmophen^{®} V218: propoxyliertes Glycerin; OH-Zahl 245 mg KOH/g; Bayer AG, Leverkusen, DE) vorgelegt und auf 155°C aufgeheizt. Bei dieser Temperatur wurden 321 g Butylacrylat, 366 g Styrol und 198 g Hydroxyethylmethacrylat innerhalb 2 Stunden zudosiert und parallel dazu eine Lösung aus 17,1 g Di-tert.-butylperoxid in 28,6 g Butylglykol. Im Anschluss daran wurde eine Monomermischung aus 83 g Hydroxyethylmethacrylat, 180 g Butylacrylat, 139 g Styrol und 34 g Acrylsäure innerhalb 1 Stunde zudosiert und parallel dazu 12,9 g Di-tert.-butylperoxid in 21,4 g Butylglykol. Anschließend 2 Stunde bei 150 bis 155°C nachgerührt, dann auf 100°C abgekühlt und 50 g Dimethylethanolamin zugegeben. Nach 30 Minuten Homogenisieren wurde innerhalb von 2 Stunden bei 80°C mit 1980 g Wasser dispergiert. Man erhielt eine Copolymerisat-Dispersion mit folgenden Daten:

| | |
|---|---|
| OH-Gehalt_{Theorie} (Festkörper ohne N,N-Dimethylethanolamin) | 3,2 % |
| Säurezahl (Festkörper) | 18 mg KOH/g |
| Festkörpergehalt | 40 % |
| Viskosität | 830 mPas (23°C, Schergefälle 40⁻¹) |
| pH-Wert (10 %ig in Wasser) | 9,4 |
| Neutralisationsgrad | 100 % |
| Mittlere Teilchengröße | 51 nm |
| Lösemittelgehalt | 4,5 % |

### Beispiel 5: Beständigkeiten

Zur Beurteilung der Beständigkeiten wurden Beschichtungsmittel gemäß nachstehender Tabelle (Mengen in Gewichtsteilen) aus den Dispersionen der Beispiel 3 und 4 und Bayhydur^{®} XP 2451 (hydrophiliertes Polyisocyanat auf HDI-Basis, Bayer AG, Leverkusen, DE) als Vernetzer hergestellt, mit einem Handrakel auf eine Holzplatte (Buche) appliziert und 24 h bei Raumtemperatur ausgehärtet.

| Komponente | Film A | Film B |
|---|---|---|
| Dispersion aus Beispiel 3 | 100 | |
| Dispersion aus Beispiel 4 | | 100 |
| Bayhydur^{®} XP 2451 | 36,3 | 20,8 |

Chemikalienbeständigkeit in Anlehnung an DIN 68861, 210 µm Nassfilm

| Medium und Dauer | | Film A | Film B |
|---|---|---|---|
| Wasser | 1 Tag | 5/2 | 5/2 |
| | 7 Tage | 5/2 | 4/2 |
| Schuhcreme | 5 Stunden | 5/2 | 4/2 |
| Rotwein | 5 Stunden | 4/2 | 4/2 |
| Ethanol 98% | 1 Stunde | 4/0 | 3/0 |
| Ammoniak, 12,5% | 1 Stunde | 5/2 | 4/2 |
| Isopropanol | 1 Stunde | 4/1 | 3/0 |
| | 5 Stunden | 4/1 | gelöst |

### Erster Wert: Fleckenbildung

5 = keine sichtbare Veränderung; 0 = Prüffläche stark verändert bzw. zerstört

### zweiter Wert: Resthärte

2 = unverändert; 0 = mechanisch leicht entfernbar

Der erfindungsgemäße Binder führte zu Lackfilmen mit deutlich verbesserter Beständigkeit gegen aggressive Medien, insbesondere gegen Ethanol und Isopropanol.

### Beispiel 6: Glanz

Zur Beurteilung der Glanzeigenschaften wurden Beschichtungsmittel gemäß nachstehender Tabelle (Mengen in Gewichtsteilen) aus den Dispersionen der Beispiel 3 und 4 und Bayhydur^{®} XP 2451 (hydrophiliertes Polyisocyanat auf HDI-Basis, Bayer AG, Leverkusen, DE) als Vernetzer hergestellt, mit einem Handrakel auf eine Leneta-Folie (Kunststoff-Folie nach DIN 53775, schwarz-matt, 430 x 165 mm, B. Schwegmann GmbH, Gelsdorf, DE) appliziert und 24 Stunden bei Raumtemperatur ausgehärtet.

| Komponente | Film C | Film D |
|---|---|---|
| Dispersion aus Beispiel 3 | 100 | |
| Dispersion aus Beispiel 4 | | 100 |
| Bayhydur^{®} XP 2451 | 36,3 | 20,8 |

Glanz gemessen nach DIN 67 530 an Klarlack; 200 µm Nassfilm

| Winkel | Film C | Film D |
|---|---|---|
| 20° | 85% | 21% |
| 60° | 91% | 55% |
| 85° | 98% | 78% |

Der erfindungsgemäße Binder führte zu Lackfilmen mit wesentlich höherem Glanz als der vergleichbare Binder nach dem Stand der Technik.

## Patentansprüche

1. Verfahren zur Herstellung von Copolymerisatdispersionen, bei dem
A) eine oder mehrere Vinylmonomermischungen enthaltend
a) OH-gruppenfreie (Meth)acrylsäureester und/oder Vinylaromaten,
b) hydroxyfunktionelle Vinylmonomere und/oder hydroxyfunktionelle (Meth)acrylsäureester,
c) ionische und/oder potentiell ionische, zur radikalischen Copolymerisation befähigte Monomere sowie
in Anwesenheit von
e) mindestens einer lactongruppenhaltigen Verbindung sowie
f) niedermolekularen Polyolen mit einem zahlenmittleren Molekulargewicht von 62 bis 250 Da
radikalisch polymerisiert werden und das so erhaltene Copolymerisat anschließend
B) vor oder nach Zugabe eines Neutralisationsmittels
C) in Wasser dispergiert wird.

2. Verfahren zur Herstellung von Copolymerisatdispersionen nach Anspruch 1, **dadurch gekennzeichnet, dass** die Vinylmonomermischungen A) in Anwesenheit von den Komponenten e) und f) radikalisch polymerisiert wurden.

3. Verfahren zur Herstellung von Copolymerisatdispersionen nach Anspruch 1 oder 2 **dadurch gekennzeichnet, dass** die in A) hergestellten Polymerisate eine OH-Zahl von 50 bis 150 mg KOH/g Feststoff, eine Säurezahl von 15 bis 25 mg KOH/g Feststoff und ein zahlenmittleres Molekulargewicht Mₙ von 1 500 bis 10 000 g/mol aufweisen.

4. Verfahren zur Herstellung von Copolymerisatdispersionen nach einem der Ansprüche 1 bis 3 **dadurch gekennzeichnet, dass** die in A) hergestellten Polymerisate aus 50 - 85 Gew.-% Komponente a), 15 - 40 Gew.-% Komponente b), 0,5 - 5 Gew.-% Komponente c) und 0 - 34,5 Gew.-% Komponente d) bestehen und wobei sich die Mengen aus den vorstehenden Bereichen zu 100 Gew.-% aufaddieren.

5. Verfahren zur Herstellung von Copolymerisatdispersionen nach einem der Ansprüche 1-4 **dadurch gekennzeichnet, dass** in Komponente e) ε-Caprolacton verwendet wird.

6. Verfahren zur Herstellung von Copolymerisatdispersionen nach einem der Ansprüche 1 - 5 **dadurch gekennzeichnet, dass** die Polymerisation zweistufig durchgeführt wird.

7. Copolymerisatdispersionen erhältlich nach einem Verfahren nach einem der Ansprüche 1 - 6.

8. Verwendung der Copolymerisatdispersionen nach Anspruch 7 bei der Herstellung von Beschichtungen.

9. Wässrige Beschichtungsmittel mindestens enthaltend
i) ein oder mehrere Copolymerisatdispersionen gemäß Anspruch 7 sowie
ii) mindestens einen OH-gruppenreaktiven Vernetzer.

10. Beschichtungen erhältlich aus Copolymerisatdispersionen gemäß Anspruch 7.

11. Substrate beschichtet mit Beschichtungen nach Anspruch 10.

## Claims

1. A method for producing copolymer dispersions in which
A) one or more vinyl monomer mixtures containing
a) (meth) acrylic acid esters and/or vinyl aromatics comprising no OH groups,
b) hydroxy-functional vinyl monomers and/or hydroxy-functional (meth)acrylic acid esters
c) ionic and/or potentially ionic monomers capable of free-radical copolymerisation
are free-radically polymerised in the presence of
e) at least one compound containing lactone groups and
f) low molecular weight polyols with a number-average molecular weight of 62 to 250 Da
and the resultant copolymer is then,
B) before or after addition of a neutralising agent,
C) dispersed in water.

2. A method for producing copolymer dispersions according to claim 1, **characterised in that** the vinyl monomer mixtures A) have been free-radically polymerised in the presence of components e) and f).

3. A method for producing copolymer dispersions according to claim 1 or claim 2, **characterised in that** the polymers produced in A) exhibit an OH value of 50 to 150 mg of KOH/g of solid, an acid value of 15 to 25 mg of KOH/g of solid and a number-average molecular weight Mₙ of 1500 to 10000 g/mol.

4. A method for producing copolymer dispersions according to any one of claims 1 to 3, **characterised in that** the polymers produced in A) consist of 50-85 wt.% component a), 15-40 wt.% component b), 0.5-5 wt.% component c) and 0-34.5 wt.-% component d) and wherein the quantities from the above ranges add up to 100 wt.%.

5. A method for producing copolymer dispersions according to any one of claims 1-4, **characterised in that** ε-caprolactone is used in component e).

6. A method for producing copolymer dispersions according to any one of claims 1-5, **characterised in that** polymerisation is carried out in two stages.

7. Copolymer dispersions obtainable using a method according to any one of claims 1-6.

8. Use of the copolymer dispersions according to claim 7 in the production of coatings.

9. Aqueous coating composition at least containing
i) one or more copolymer dispersions according to claim 7 and
ii) at least one OH group-reactive crosslinking agent.

10. Coatings obtainable from copolymer dispersions according to claim 7.

11. Substrates coated with coatings according to claim 10.

## Revendications

1. Procédé de préparation de dispersions de copolymère, dans lequel on polymérise de manière radicalaire:
A) un ou plusieurs mélanges de monomères vinyliques, contenant
a) des esters d'acide (méth)acrylique et/ou des aromatiques vinyliques exempts de radicaux OH,
b) des monomères vinyliques à fonction hydroxy et/ou des esters d'acide (méth)acrylique à fonction hydroxy,
c) des monomères capables de copolymérisation radicalaire, ioniques et/ou potentiellement ioniques,
en présence de
e) au moins un composé contenant un radical lactone, ainsi que
f) des polyols de faible poids moléculaire avec un poids moléculaire moyen en nombre de 62 à 250 Da,
et les copolymères ainsi obtenus sont ensuite dispersés
B) avant ou après addition d' »un agent de neutralisation,
C) dans de l'eau.

2. Procédé de préparation de dispersions de copolymère selon la revendication 1, **caractérisé en ce que** les mélanges de monomères vinyliques A) sont polymérisés de manière radicalaire en présence des composants e) et f).

3. Procédé de préparation de dispersions de copolymère selon la revendication 1 ou 2, **caractérisé en ce que** les polymères préparés en A) présentent un indice OH allant de 50 à 150 mg KOH/g de matière solide, un indice d'acide allant de 15 à 25 mg KOH/g de matière solide, et un poids moléculaire moyen en nombre Mn allant de 1500 à 10 000 g/mole.

4. Procédé de préparation de dispersions de copolymère selon l'une des revendications 1 à 3, **caractérisé en ce que** les polymères préparés en A) consistent en 50-85% en poids des composants a), 15-40% en poids des composants b), 0,5-5% en poids des composants c), et 0-34,5% en poids des composants d), et où les quantités des intervalles ci-dessus s'additionnent pour faire 100% en poids.

5. Procédé de préparation de dispersions de copolymère selon l'une des revendications 1 à 4, **caractérisé en ce que** l'on utilise l'ε-caprolactone dans les composants e).

6. Procédé de préparation de dispersions de copolymère selon l'une des revendications 1 à 5, **caractérisé en ce que** la polymérisation est réalisée en deux étapes.

7. Dispersions de copolymère, accessibles selon un procédé selon l'une des revendications 1 à 6.

8. Utilisation des dispersions de copolymère selon la revendication 7, dans la préparation de revêtements.

9. Agent aqueux de revêtement, contenant au moins :
i) une ou plusieurs dispersions de copolymère selon la revendication 7, ainsi que
ii) au moins un réticulant réagissant avec les radicaux OH.

10. Revêtements pouvant être obtenus à partir des dispersions de copolymère selon la revendication 7.

11. Substrats revêtus des revêtements selon la revendication 10.
